# EUROPÄISCHE PATENTSCHRIFT

(11) **EP 2 669 039 B1**
(45) Veröffentlichungstag und Bekanntmachung des Hinweises auf die Patenterteilung: **30.08.2017**
(21) Anmeldenummer: 13168961.4
(22) Anmeldetag: 23.05.2013
(51) Int. Cl.: B23K 26/08, B23K 26/38, B23K 26/40, H01G 4/30

(54) **Vorrichtung und Verfahren zur Einbringung eines Wellenschnitts in eine laufende Materialbahn unter Verwendung eines Laserstrahles**
Device and method for introducing a wave cut into a moving sheet of material using a laser beam
Dispositif et procédé d'intégration d'une coupe ondulée dans une bande de matériau déroulée, en utilisant un faisceau laser

(30) Priorität: 29.05.2012 DE 102012208937
(43) Veröffentlichungstag der Anmeldung: 04.12.2013
(73) Patentinhaber: Kampf Schneid- und Wickeltechnik GmbH & Co. KG, 51674 Wiehl (DE)
(72) Erfinder: Schleicher, Stephan, 51491 Overath (DE)
(74) Vertreter: Greif, Thomas

(56) Entgegenhaltungen:
- DE-A1- 19 937 267
- DE-B3- 10 348 179
- US-A- 4 549 063
- US-A1- 2003 047 695

## Beschreibung

Die Erfindung betrifft eine Vorrichtung zum Längsschneiden von laufenden Materialbahnen gemäß dem Oberbegriff des Anspruchs I (siehe, z.B., DE 103 48 179). Ein Verfahren zun Längsschneidien von laufenden Materialbahnen unter Verwendung einer solchen Vorrichtung ist weiter im Anspruch 8 definiert.

Der sogenannte Wellenschnitt (Wave Cut) kommt beispielsweise bei der Herstellung von Kondensatoren aus metallisierten BOPP-Folien (Biaxially Oriented Polypropylene) oder metallisierten BOPET-Folien (Biaxially Oriented Polyethylene Terephthalate) zum Einsatz. Durch den wellenförmigen Schnitt ergibt sich beim Aufwickeln solcher Folien zu einem Kondensator eine "weiche" Stirnseite und damit eine bessere Anbindung zur Anode und Kathode. Beispielhaft offenbart die Offenlegungsschrift DE 35 17 243 A1 ein solches Verfahren zur Herstellung eines Kondensators.

Dabei werden in eine solche Folie typischerweise mehrere wellenförmige Längsschnitte eingebracht, die durch eine entsprechende Anzahl an rotierenden Rundmessern bewirkt werden, in deren Umfang eine axial wellenförmige Kontur eingeprägt ist. Allerdings hat ein solcher Wellenschnitt mit rotierenden Klingen verschiedene Nachteile, zu denen insbesondere ein begrenztes Verhältnis der Amplitude zur Wellenlänge gehört, denn die Wellenlänge kann im Verhältnis zur Amplitude nur begrenzt verkleinert werden. Ferner kann es zu Kratzern auf der Folie zu kommen, und der entstehende Schneidstaub kann sich nachteilig auswirken.

Aufgabe der Erfindung ist es daher, eine Vorrichtung und ein Verfahren zur Einbringung wenigstens eines wellenförmigen Längsschnitts in eine laufende Materialbahn bereitzustellen, mit der/dem sich die genannten Nachteile vermeiden lassen.

Erfindungsgemäß wird diese Aufgabe durch eine Vorrichtung gemäß dem unabhängigen Anspruch 1 gelöst. Vorteilhafte Weiterbildungen der Vorrichtung ergeben sich aus den Unteransprüchen 2 bis 7. Die Erfindung wird ferner durch ein Verfahren unter Verwendung einer solchen Vorrichtung gemäß einem der Ansprüche 8-11 gelöst.

Die erfindungsgemäße Vorrichtung zum Längsschneiden von laufenden Materialbahnen umfasst Schneidmittel zur Einbringung wenigstens eines wellenförmigen Längsschnitts in eine laufende Materialbahn, wobei diese Schneidmittel wenigstens eine Laserquelle umfassen, deren Laserstrahl auf die Materialbahn richtbar und gegenüber der Materialbahn quer zur Laufrichtung der Materialbahn so hin und her verfahrbar ist, dass der Laserstrahl einen wellenförmigen Längsschnitt in die laufende Materialbahn einbringt.

Der Wellenschnitt wird somit durch einen Laser erzeugt, der sich mit einer gewünschten Amplitude quer zur Laufrichtung hin und her bewegt, so dass zusammen mit der Bewegung der Materialbahn ein wellenförmiger Schnitt erzeugt wird. Dabei ist der Laserstrahl vorzugsweise senkrecht auf die Materialbahn gerichtet, aber es können auch von 90° abweichende Winkel etwa im Bereich von 80-100° gewählt werden. Prinzipiell ist jeder geeignete Winkel von der Erfindung umfasst. Ferner ist der Laserstrahl vorzugsweise in einem Winkel von 90° zur Laufrichtung der Materialbahn verfahrbar, aber auch für diese Bewegungen können andere Winkel gewählt werden, solange sich der Laserstrahl quer zur Laufrichtung der Materialbahn bewegt.

Bei der Materialbahn handelt es sich vorzugsweise um eine metallisierte Folie, insbesondere um eine metallisierte BOPP-Folie oder eine metallisierte BOPET-Folie im Dickenbereich von 0,9□m bis 15□m. Derartige Folien werden unter anderem als Batterie- oder Kondensatorfolien eingesetzt, und müssen hierzu durch mehrere Längsschnitte in Bahnabschnitte aufgeteilt werden. Die erfindungsgemäße Vorrichtung und das zugehörige Verfahren sind jedoch für den wellenförmigen Längsschnitt jeglicher Materialbahnen einsetzbar, bei denen die Vorteile gegenüber mechanischen Schneideinrichtungen mit rotierenden Schneidmessern nutzbar sind. Beispielsweise kann es sich um verstreckte oder unverstreckte Kunststofffolien, Aluminiumfolien, Kupferfolien, etc. handeln.

Durch den Laserschnitt lässt sich gegenüber mechanischen Lösungen mit rotierenden Rundmessern insbesondere das Verhältnis der Amplitude zur Wellenlänge erhöhen, d.h. die Wellenlänge lässt sich gegenüber der Amplitude stärker verringern. Mit mechanischen Schneideinrichtungen sind beispielsweise Verhältnisse Wellenlänge / Amplitude von 8:1 und größer erforderlich, während mit einem wellenförmigen Laserschnitt deutlich kleinere Verhältnisse der Wellenlänge zur Amplitude erreicht werden können, beispielsweise 4:1.

Ferner kann bei einem Laserschnitt die Bahngeschwindigkeit erhöht werden, und Kratzer auf der Materialbahn werden vermieden. Gegenüber bisher eingesetzten mechanischen Wellenmessern kommt es nämlich zu einer Bahnberuhigung. Darüber hinaus lässt sich Schneidstaub vermeiden, und es kann eine Kostenoptimierung erreicht werden, da die Standzeit eines berührungslos schneidenden Lasers gegenüber einem Wellenmesser wesentlich höher ist.

Der Laserstrahl wird, gemäß der Erfindung, indirekt auf die Materialbahn gerichtet werden.

Gemäß der Erfindung, ist Laserstrahl indirekt über wenigstens ein ansteuerbares Reflexionsmittel auf die Materialbahn richtbar, wobei das Reflexionsmittel so ansteuerbar ist, dass der reflektierte Laserstrahl gegenüber der Materialbahn quer zur Laufrichtung der Materialbahn verfahrbar ist. Die Laserquelle steht bei dieser Lösung fest, und die Hin- und Herbewegung des Laserstrahls wird durch eine entsprechende Ausrichtung des Reflexionsmittels zur Materialbahn bewirkt. Das Reflexionsmittel umfasst dabei beispielsweise wenigstens einen Spiegel, der gegenüber der Materialbahn schwenkbar ist.

Ferner kann die Amplitude der Bewegung des Laserstrahls quer zur Laufrichtung der Materialbahn variabel einstellbar sein. Dies hat gegenüber mechanischen Lösungen den Vorteil, dass kein Austausch von Bauteilen erfolgen muss, um die Vorrichtung auf eine andere Wellenform einzustellen.

In einem Ausführungsbeispiel der Erfindung ist zwischen der Laserquelle und der Materialbahn eine Laserfalle angebracht, mit welcher der Laserstrahl der Laserquelle temporär auffangbar ist. Hierdurch kann die Laserquelle bereits aktiviert werden, bevor der Laserstrahl für einen Schnitt eingesetzt wird. Solange der Laserstrahl nicht eingesetzt wird, wird er in der Laserfalle aufgefangen.

Gemäß der Erfindung umfasst die Vorrichtung zusätzlich zu der wenigstens einen Laserquelle wenigstens eine mechanische Schneideinrichtung zur Einbringung eines wellenförmigen Längsschnitts in die laufende Materialbahn. Die Laserschneidmittel werden somit durch mechanische Schneidmittel ergänzt, die dann gezielt einsetzbar, aber auch miteinander kombinierbar sind.

Gemäß der Erfindung weist die Vorrichtung wenigstens ein Rundmessern mit einer axial wellenförmigen Klingenkontur auf, welches temporär so in die laufende Materialbahn einschwenkbar ist, das es einen wellenförmigen Längsschnitt in die laufende Materialbahn einbringt. Die Materialbahn wird dann wahlweise mittels Laser oder dem rotierenden Rundmesser geschnitten.

Dieses zusätzliche Rundmesser kann vorteilhaft für ein Verfahren eingesetzt werden, das ebenfalls von der Erfindung umfasst ist und vorsieht, dass während des Einrichtens und/oder Beschleunigens der Materialbahn wenigstens ein wellenförmiger Längsschnitt durch das wenigstens eine Rundmesser in die laufende Materialbahn eingebracht wird. Das wenigstens eine Rundmesser wird dann aus der laufenden Materialbahn ausgeschwenkt und der Laserstrahl auf die Materialbahn gerichtet, sobald die Materialbahn definierte Parameter wenigstens bezüglich der Bahngeschwindigkeit aufweist. Für das Einrichten und Beschleunigen der Materialbahn wird somit das mechanische Schneidmittel eingesetzt, und der Laser wird erst zugeschaltet, wenn die Materialbahn wenigstens eine definierte Geschwindigkeit erreicht hat. Zu den Parametern der Materialbahn können jedoch auch ein stabiler Bahnverlauf und Bahnzug zählen.

Hierbei kann insbesondere die genannte Laserfalle zur Anwendung kommen, wenn die Laserquelle aktiviert wird, bevor die Materialbahn die definierten Parameter wenigstens bezüglich der Bahngeschwindigkeit aufweist und der Laserstrahl in der Laserfalle aufgefangen wird, bis er auf die Materialbahn gerichtet wird. Dies hat sicherheitstechnische Vorteile. Es dient dem Personenschutz.

Das wenigstens eine Rundmesser kann dann beim Abbremsen der Materialbahn wieder in die laufende Materialbahn eingeschwenkt und der Laserstrahl von der Materialbahn entfernt werden. So wird beim Einrichten und beim Beschleunigungs- und Abbremsvorgang das Rundmesser eingesetzt, um in diesen Phasen eine Bahntrennung zu ermöglichen, während der Laser nur eingesetzt wird, wenn sich die Materialbahn konstant mit bestimmten Parametern bewegt. Beim Wechsel von einer mechanischen Schneideinrichtung zur Laserquellen und/oder umgekehrt findet vorzugsweise temporär eine Überlappung beider Schneidverfahren statt, um die Bahntrennung sicherzustellen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

### Von den Abbildungen zeigt:

- Fig. 1: eine schematische Aufsicht auf eine laufende Materialbahn mit mehreren wellenförmigen Längsschnitten; und
- Fig. 2: eine schematische Seitenansicht auf eine laufende Materialbahn mit mechanischer Schneideinrichtung und Laserquelle.

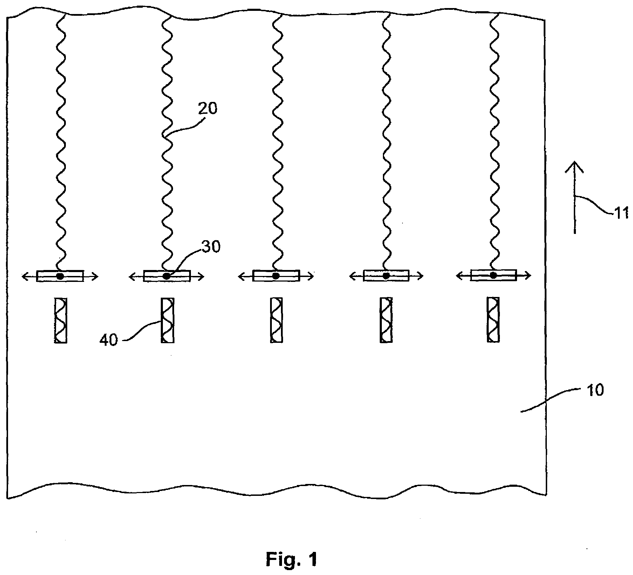

In Fig. 1 ist schematisch eine Aufsicht auf eine laufende Materialbahn 10 gezeigt, deren Laufrichtung mit einem Pfeil 11 gekennzeichnet ist. Bei der Materialbahn handelt es sich beispielhaft um eine metallisierte BOPP-Folie oder eine metallisierte BOPET-Folie im Dickenbereich von 0,9□m bis 15□m.

Vorzugsweise oberhalb der laufenden Materialbahn 10 ist wenigstens eine Laserquelle angebracht, die einen Laserstrahl 30 erzeugt, welcher auf die Materialbahn 10 gerichtet werden kann. Dieser Laserstrahl 30 ist quer zur Laufrichtung 11 hin und her verfahrbar, was in Fig. 1 durch entsprechende Doppelpfeile dargestellt ist. Zusammen mit der Bewegung der Materialbahn 10 bringt der Laserstrahl 30 dann einen wellenförmigen Längsschnitt 20 in die Materialbahn 10 ein. Dabei ist die Amplitude der Hin- und Herbewegung des Laserstrahls 30 vorzugsweise variabel einstellbar, so dass zusammen mit der Laufgeschwindigkeit der Bahn 10 verschiedene Wellenformen erzeugbar sind.

In dem in Fig. 1 dargestellten Ausführungsbeispiel sind beispielhaft fünf Laserquellen mit einem zugehörigen Laserstrahl vorgesehen. In Abhängigkeit von der gewünschten Bahnbreite kann jedoch auch eine kleinere oder größere Anzahl an Laserquellen gewählt werden. Ferner sind in diesem Ausführungsbeispiel ergänzend zu den Laserquellen fünf mechanische Schneideinrichtungen 40 vorgesehen, mit denen ebenfalls Längsschnitte in die Materialbahn 10 einbringbar sind.

Die mechanischen Schneideinrichtungen 40 sind beispielsweise in Laufrichtung jeweils vor einem Laserstrahl 30 angebracht. So kann das erfindungsgemäße Verfahren durchgeführt werden, das vorsieht, dass die Materialbahn 10 beim Einrichten und Beschleunigen zunächst mit den mechanischen Schneideinrichtungen 40 geschnitten wird, und die Laser erst zugeschaltet werden, wenn die Materialbahn 10 bestimmte Parameter wie Bahngeschwindigkeit, stabiler Bahnverlauf und Bahnzug, etc. aufweist. Beim Abbremsen der Materialbahn 10 wird der Laser wieder von der Materialbahn 10 entfernt, d.h. nicht mehr auf die Materialbahn 10 gerichtet, und die mechanischen Schneideinrichtungen 40 schneiden in dieser Phase wieder die Materialbahn 10. Die mechanischen Schneideinrichtungen 40 können miteinander verbunden sein, so dass sie synchron angetrieben und bewegt werden können. Das Gleiche gilt für die Laserquellen.

Um beim Übergang von einer Schneidart zur anderen eine kurze Überlappung der beiden Schneidverfahren zu ermöglichen, kann vorgesehen sein, dass die Schneideinrichtungen 40 erst aus der Folie 10 ausgeschwenkt werden, wenn die dahinter liegenden Laserstrahlen 30 bereits schneiden. Zur Entfernung der Laser beim Abbremsvorgang erfolgt dies in umgekehrter Reihenfolge, und die Laser werden erst entfernt, wenn die davor liegende mechanische Schneideinrichtung in die Folie 10 eingeschwenkt ist und schneidet.

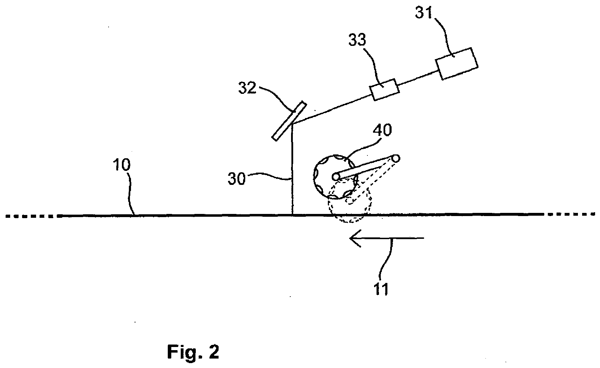

Fig. 2 zeigt eine schematische Seitenansicht auf eine laufende Materialbahn 10 mit einer mechanischen Schneideinrichtung 40 und einer Laserquelle 31. Als mechanische Schneideinrichtung 40 ist, gemäß der Erfindung, ein rotierendes Rundmesser vorgesehen, in dessen Umfang eine axial wellenförmige Kontur eingeprägt ist. Das Rundmesser 40 ist in die Materialbahn 10 einschwenkbar, was in Fig. 2 gestrichelt angedeutet ist. Die Folie 10 bewegt sich in dieser Abbildung in Pfeilrichtung nach links, so dass die mechanische Schneideinrichtung 40 in Laufrichtung 11 vor dem Laserstrahl 30 angeordnet ist, der durch die Laserquelle 31 erzeugt wird.

Dabei ist der Laserstrahl 30 nicht direkt von der Laserquelle 31 auf die Folie 10 gerichtet, sondern er wird indirekt über ein Reflexionsmittel 32 auf die Materialbahn 10 gelenkt.

Als Reflexionsmittel 32 wird beispielsweise ein ansteuerbarer Spiegel eingesetzt, dessen Bewegung eine Hin- und Herbewegung des Laserstrahls 30 gegenüber der Laufrichtung der Materialbahn 10 erzeugen kann. Dabei bewegt sich der Spiegel 32 beispielsweise nicht selbst mit einer Amplitude bezüglich der Laufrichtung 11 hin und her, sondern er schwenkt pendelnd um eine Achse, so dass ein von der Laserquelle 31 auf den Spiegel 32 auftreffender Laserstrahl 30 in unterschiedlichen Winkeln in Richtung der Materialbahn 10 reflektiert wird. Allerdings trifft der Laserstrahl 30 bei einer solchen Ausführungsform nicht immer in einem Winkel von 90° auf die Folie 10, sondern der Winkel ändert sich. Soll der reflektierte Laserstrahl 30 konstant in einem Winkel von 90° auf die Folie 10 auftreffen, könnte auch die Laserquelle 31 beweglich ausgeführt sein, oder die Laserquelle 31 bewegt sich hin und her und richtet den Laserstrahl 30 dabei direkt auf die Materialbahn 10.

Ferner ist zwischen der Laserquelle 31 und der Folie 10, bzw. zwischen der Laserquelle 31 und dem Spiegel 32, eine Laserfalle 33 angeordnet. Diese Laserquelle 33 kann dazu genutzt werden, die Laserquelle 31 zu aktivieren, bevor der Laserstrahl 30 auf die Bahn 10 gerichtet werden soll, denn der Laserstrahl 30 kann solange in der Laserfalle 33 aufgefangen werden.

Die Anordnung der Laserquelle 31, der Laserfalle 33 und des Spiegels 32 bezüglich der Folie 10 können jedoch auch anders gewählt sein, denn die Abbildung in Fig. 2 gibt lediglich das Grundprinzip der Erfindung wieder.

### Bezugszeichenliste:

- 10: Materialbahn, Folie
- 11: Laufrichtung
- 20: Längsschnitt, wellenförmig
- 30: Schneidmittel, Laserstrahl
- 31: Laserquelle
- 32: Reflexionsmittel, Spiegel
- 33: Laserfalle
- 40: Schneidmittel, mechanische Schneideinrichtung, Rundmesser

## Patentansprüche

1. Vorrichtung zum Längsschneiden von laufenden Materialbahnen (10), umfassend Schneidmittel zur Einbringung wenigstens eines wellenförmigen Längsschnitts (20) in eine laufende Materialbahn (10), wobei die Schneidmittel wenigstens eine Laserquelle (31) umfassen, deren Laserstrahl (30) auf die Materialbahn (10) richtbar ist und gegenüber der Materialbahn (10) quer zur Laufrichtung der Materialbahn (10) so hin und her verfahrbar ist, dass der Laserstrahl (30) einen wellenförmigen Längsschnitt (20) in die laufende Materialbahn (10) einbringt, **dadurch gekennzeichnet, dass** der Laserstrahl (30) indirekt über wenigstens ein ansteuerbares Reflexionsmittel (32) auf die Materialbahn (32) richtbar ist, wobei das Reflexionsmittel (32) so ansteuerbar ist, dass der reflektierte Laserstrahl (30) gegenüber der Materialbahn (10) quer zur Laufrichtung der Materialbahn (10) verfahrbar ist, wobei die Vorrichtung wenigstens ein Rundmesser (40) mit einer axial wellenförmigen Klingenkontur aufweist, welches temporär so in die laufende Materialbahn (10) einschwenkbar ist, das es einen wellenförmigen Längsschnitt (20) in die laufende Materialbahn (10) einbringt.

2. Vorrichtung nach Anspruch 1, **dadurch gekennzeichnet, dass** der Laserstrahl (30) senkrecht auf die Materialbahn (10) gerichtet ist.

3. Vorrichtung nach Anspruch 1, **dadurch gekennzeichnet, dass** das Reflexionsmittel (32) wenigstens einen Spiegel umfasst.

4. Vorrichtung nach einem der Ansprüche 1 bis 3, **dadurch gekennzeichnet, dass** die Amplitude der Bewegung des Laserstrahls (30) quer zur Laufrichtung der Materialbahn (10) variabel einstellbar ist.

5. Vorrichtung nach einem der Ansprüche 1 bis 4, **dadurch gekennzeichnet, dass** der Laserstrahl (30) in einem Winkel von 90° zur Laufrichtung der Materialbahn (10) verfahrbar ist.

6. Vorrichtung nach einem der Ansprüche 1 bis 5, **dadurch gekennzeichnet, dass** die Materialbahn (10) eine metallisierte Folie ist.

7. Vorrichtung nach einem der Ansprüche 1 bis 6, **dadurch gekennzeichnet, dass** zwischen der Laserquelle (31) und der Materialbahn (10) eine Laserfalle (33) angebracht ist, mit welcher der Laserstrahl (30) der Laserquelle (31) temporär auffangbar ist.

8. Verfahren zur Einbringung eines wellenförmigen Längsschnitts in eine laufende Materialbahn unter Verwendung einer Vorrichtung gemäß Anspruch 7, **dadurch gekennzeichnet, dass** während des Einrichtens und/oder Beschleunigens der Materialbahn (10) wenigstens ein wellenförmiger Längsschnitt (20) durch das wenigstens eine Rundmesser (40) in die laufende Materialbahn (10) eingebracht wird, und dass das wenigstens eine Rundmesser (40) aus der laufenden Materialbahn (10) ausgeschwenkt und der Laserstrahl (30) auf die Materialbahn (10) gerichtet wird, sobald die Materialbahn (10) definierte Parameter wenigstens bezüglich der Bahngeschwindigkeit aufweist.

9. Verfahren nach Anspruch 8, **dadurch gekennzeichnet, dass** die Laserquelle aktiviert wird, bevor die Materialbahn (10) die definierten Parameter wenigstens bezüglich der Bahngeschwindigkeit aufweist und der Laserstrahl (30) in einer Laserfalle (33) aufgefangen wird, bis er auf die Materialbahn gerichtet wird.

10. Verfahren nach einem der Ansprüche 8 und 9, **dadurch gekennzeichnet, dass** das wenigstens eine Rundmesser (40) beim Abbremsen der Materialbahn (10) in die laufende Materialbahn (10) eingeschwenkt und der Laserstrahl (30) von der Materialbahn (10) entfernt wird.

11. Verfahren nach einem der Ansprüche 8 bis 10, **dadurch gekennzeichnet, dass** beim Wechsel von einer mechanischen Schneideinrichtung (40) zur Laserquelle (31) und/oder umgekehrt temporär eine Überlappung beider Schneidverfahren stattfindet.

## Claims

1. Device for longitudinally cutting running webs of material (10), comprising cutting means for introducing at least one wave-shaped longitudinal cut (20) into a running web of material (10), the cutting means comprising at least one laser source (31), the laser beam (30) of which can be directed onto the web of material (10) and can be moved back and forth with respect to the web of material (10) transversely in relation to the running direction of the web of material (10) in such a way that the laser beam (30) introduces a wave-shaped longitudinal cut (20) into the running web of material (10), **characterized in that** the laser beam (30) can be directed onto the web of material (32) indirectly by way of at least one activatable reflection means (32), wherein the reflection means (32) can be activated in such a way that the reflected laser beam (30) is movable with respect to the web of material (10) transversely in relation to the running direction of the web of material (10), wherein the device has at least one circular cutter (40) with an axially wave-shaped blade contour, which can be swung in temporarily into the running web of material (10) in such a way that it introduces a wave-shaped longitudinal cut (20) into the running web of material (10).

2. Device according to Claim 1, **characterized in that** the laser beam (30) is directed perpendicularly onto the web of material (10).

3. Device according to Claim 1, **characterized in that** the reflection means (32) comprises at least one mirror.

4. Device according to one of Claims 1 to 3, **characterized in that** the amplitude of the movement of the laser beam (30) transversely in relation to the running direction of the web of material (10) is variably adjustable.

5. Device according to one of Claims 1 to 4, **characterized in that** the laser beam (30) is movable at an angle of 90° in relation to the running direction of the web of material (10).

6. Device according to one of Claims 1 to 5, **characterized in that** the web of material (10) is a metallized film.

7. Device according to one of Claims 1 to 6, **characterized in that** a laser trap (33), with which the laser beam (30) of the laser source (31) can be temporarily trapped, is provided between the laser source (31) and the web of material (10).

8. Method for introducing a wave-shaped longitudinal cut into a running web of material by using a device according to Claim 7, **characterized in that**, during the setting up and/or acceleration of the web of material (10), at least one wave-shaped longitudinal cut (20) is introduced into the running web of material (10) by the at least one circular cutter (40), and **in that** the at least one circular cutter (40) is swung out from the running web of material (10) and the laser beam (30) is directed onto the web of material (10) as soon as the web of material (10) has defined parameters at least with respect to the web speed.

9. Method according to Claim 8, **characterized in that** the laser source is activated before the web of material (10) has the defined parameters at least with respect to the web speed and the laser beam (30) is trapped in a laser trap (33) until it is directed onto the web of material.

10. Method according to either of Claims 8 and 9, **characterized in that** the at least one circular cutter (40) is swung into the running web of material (10) during the slowing down of the web of material (10) and the laser beam (30) is removed from the web of material (10).

11. Method according to one of Claims 8 to 10, **characterized in that**, when changing from a mechanical cutting device (40) to the laser source (31) and/or vice versa, overlapping of the two cutting methods temporarily takes place.

## Revendications

1. Dispositif de coupage en longueur de bandes de matière (10) défilantes, comprenant des moyens de coupe destinés à pratiquer au moins une coupe longitudinale (20) de forme ondulée dans une bande de matière (10) défilante, les moyens de coupe comprenant au moins une source de laser (31) dont le rayon laser (30) peut être dirigé sur la bande de matière (10) et peut être déplacé dans un sens et dans l'autre par rapport à la bande de matière (10) transversalement au sens du défilement de la bande de matière (10) de telle sorte que le rayon laser (30) pratique une coupe longitudinale (20) de forme ondulée dans une bande de matière (10) défilante, **caractérisé en ce que** le rayon laser (30) peut être dirigé indirectement sur la bande de matière (32) par le biais d'au moins un moyen de réflexion (32) commandable, le moyen de réflexion (32) pouvant être entraîné de telle sorte que le rayon laser (30) réfléchi peut être déplacé par rapport à la bande de matière (10) transversalement au sens du défilement de la bande de matière (10), le dispositif possédant au moins une lame ronde (40) ayant un contour de lame de forme ondulée dans le sens axial qui peut être pivoté temporairement dans la bande de matière (10) défilante de telle sorte qu'il pratique une coupe longitudinale (20) de forme ondulée dans la bande de matière (10) défilante.

2. Dispositif selon la revendication 1, **caractérisé en ce que** le rayon laser (30) est dirigé perpendiculairement sur la bande de matière (10).

3. Dispositif selon la revendication 1, **caractérisé en ce que** le moyen de réflexion (32) comprend au moins un miroir.

4. Dispositif selon l'une des revendications 1 à 3, **caractérisé en ce que** l'amplitude du mouvement du rayon laser (30) transversalement au sens du défilement de la bande de matière (10) est réglable de façon variable.

5. Dispositif selon l'une des revendications 1 à 4, **caractérisé en ce que** le rayon laser (30) peut être déplacé sous un angle de 90° par rapport au sens du défilement de la bande de matière (10).

6. Dispositif selon l'une des revendications 1 à 5, **caractérisé en ce que** la bande de matière (10) est un film métallisé.

7. Dispositif selon l'une des revendications 1 à 6, **caractérisé en ce qu'**entre la source de laser (31) et la bande de matière (10) est monté un piège à laser (33) avec lequel le rayon laser (30) de la source de laser (31) peut être temporairement intercepté.

8. Procédé pour pratiquer une coupe longitudinale de forme ondulée dans une bande de matière défilante en utilisant un dispositif selon la revendication 7, **caractérisé en ce que** pendant l'ajustage et/ou l'accélération de la bande de matière (10), au moins une coupe longitudinale (20) de forme ondulée est pratiquée par l'au moins une lame ronde (40) dans la bande de matière (10) défilante, et **en ce que** l'au moins une lame ronde (40) est pivotée hors de la bande de matière (10) défilante et le rayon laser (30) est dirigé sur la bande de matière (10) dès que la bande de matière (10) présente des paramètres définis au moins en rapport avec la vitesse de la bande.

9. Procédé selon la revendication 8, **caractérisé en ce que** la source de laser est activée avant que la bande de matière (10) présente les paramètres définis au moins en rapport avec la vitesse de la bande et le rayon laser (30) est intercepté dans un piège à laser (33) jusqu'à ce qu'il soit dirigé sur la bande de matière.

10. Procédé selon l'une des revendications 8 et 9, **caractérisé en ce que** l'au moins une lame ronde (40) est pivotée dans la bande de matière (10) défilante lors du freinage de la bande de matière (10) et le rayon laser (30) est éloigné de la bande de matière (10).

11. Procédé selon l'une des revendications 8 à 10, **caractérisé en ce que** lors du changement d'un dispositif de coupe mécanique (40) à la source de laser (31) et/ou inversement, il se produit temporairement un chevauchement des deux procédés de coupe.
